# EUROPÄISCHE PATENTSCHRIFT

(11) **EP 2 405 246 B1**
(45) Veröffentlichungstag und Bekanntmachung des Hinweises auf die Patenterteilung: **27.08.2014**
(21) Anmeldenummer: 10168674.9
(22) Anmeldetag: 07.07.2010
(51) Int. Cl.: G01K 7/25, G05F 1/56, G05F 1/569

(54) **Schaltungsanordnung und Eingabebaugruppe**
Switching assembly and input assembly
Agencement de commutation et composant de saisie

(43) Veröffentlichungstag der Anmeldung: 11.01.2012
(73) Patentinhaber: Siemens Aktiengesellschaft, 80333 München (DE)
(72) Erfinder: Schwabe, Dietmar, 08496, Neumark (DE)

(56) Entgegenhaltungen:
- US-A- 4 716 358
- US-A- 5 654 654

## Beschreibung

Die Erfindung betrifft eine Schaltungsanordnung zur Begrenzung einer Spannung zwischen einem ersten Klemmpunkt und einem zweiten Klemmpunkt umfassend, einen ersten Längszweig und einen zweiten Längszweig, wobei zwischen den beiden Längszweigen eine Betriebsspannung angelegt ist, ein drittes elektronisches Bauelement zum Schalten und Verstärken einer elektrischen Spannung, welches zwischen den Längszweigen angeordnet ist, mit einem Eingang an dem eine erste Referenzspannung angeschlossen ist, und einem Ausgang, der über einen zweiten Widerstand mit einem Eingang eines ersten elektronischen Bauelementes zum Schalten und Verstärken einer elektrischen Spannung in Verbindung steht, wobei das erste elektronische Bauelement derart zwischen den Längszweigen angeordnet ist, dass ein Strom vom ersten Längszweig über die Klemmpunkte, das erste Bauelement und über einen ersten Widerstand zu dem Längszweig fließen kann, wenn zwischen den Klemmpunkten ein Lastwiderstand angeordnet ist.

Eine derartige Schaltungsanordnung ist dem Fachmann als eine Stromquelle bzw. Spannungsquelle zum Erzeugen einer Ausgangsspannung zwischen den Klemmpunkten bekannt.

Bei der bekannten Schaltungsanordnung ist es von Nachteil, dass wenn zwischen den Klemmpunkten keine Last angeordnet ist oder es beispielsweise zu einem Drahtbruch bei der Leitung zu der angeschlossenen Last zwischen den Klemmpunkten kommt, oder der Lastwiderstand einen hochohmigen Zustand annimmt, eine Leerlaufspannung unzulässig hohe Werte annehmen kann.

Es ist daher die Aufgabe der Erfindung, die nach dem Stand der Technik bekannte Schaltungsanordnung derart zu erweitern, dass eine Begrenzung der Leerlaufspannung erreicht wird.

Die Aufgabe wird durch die Merkmalskombination des Anspruchs 1 gelöst.

Eine derartige Schaltungsanordnung wird mit Vorteil bei Eingabebaugruppen eingesetzt, welche ausgestaltet sind um Widerstandstemperaturmesssensoren anzuschließen.

In einer ersten Ausgestaltung der Erfindung wird die nach dem Stand der Technik bekannte Schaltungsanordnung durch ein zweites elektronisches Bauelement zum Schalten und Verstärken elektrischer Spannung und dem Einsatz einer ersten Referenzspannung derart erweitert, dass für den Fall, dass es beispielsweise zu einem Drahtbruch an den ersten und zweiten Klemmpunkten kommen sollte, eine Absenkung der Spannung an dem ersten Klemmpunkt erreichbar ist.

Eine derartige Überspannungsbegrenzung ist für vorhandene Strom- und/oder Spannungsverhältnisse beliebig dimensionierbar und kann in den bestehenden Schaltungsanordnungen bei konkreten Gegebenheiten gut angepasst werden. Insbesondere bei Eingabebaugruppen, wie z.B. Analogeingabebaugruppen, wie sie in der Prozessautomatisierung eingesetzt werden, ist diese Schaltungsanordnung von Vorteil, da beispielsweise bei Resistiven-Temperatur-Detektoren (RTD-Eingängen) störende Einflüsse, wie sie durch die erhöhte Leerlaufspannung hervorgerufen werden, zu benachbarten Eingangskanälen der Eingabebaugruppen vermieden werden.

Als elektronische Bauelemente können Transistoren, FET's, MOS-FET's oder Operationsverstärken einzeln oder auch in einer Kombination genutzt werden.

Weitere Merkmale und ein Ausgestaltungsbeispiel werden in der Zeichnung näher erläutert. Es zeigen:
- FIG 1: eine Schaltungsanordnung nach dem Stand der Technik, und
- FIG 2: eine erweiterte Schaltungsanordnung zur Begrenzung einer Spannung zwischen einem ersten Klemmpunkt und einem zweiten Klemmpunkt.

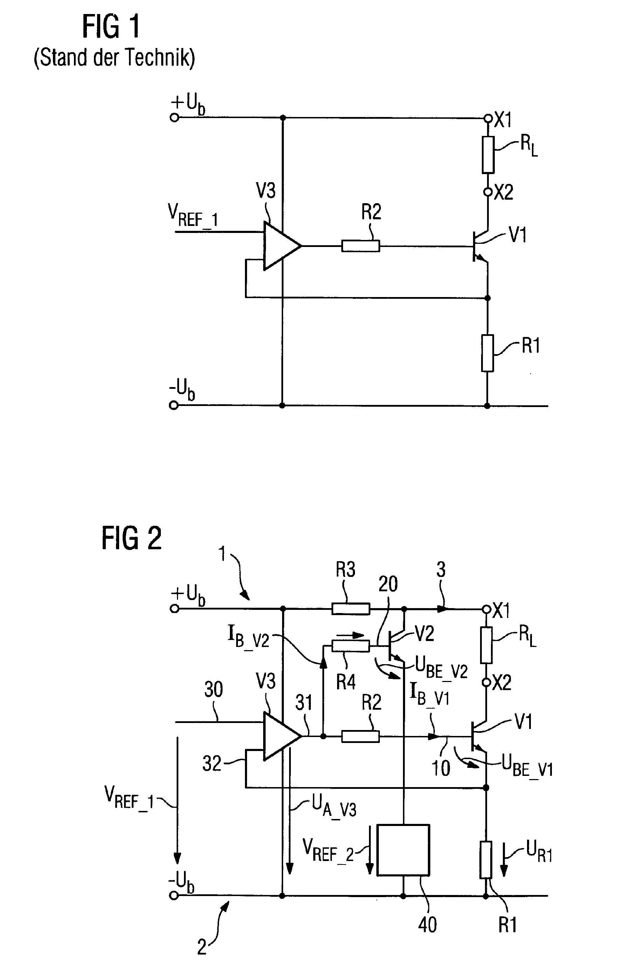

Gemäß FIG 1 ist der Stand der Technik einer Schaltungsanordnung gezeigt. Für einen Messumformer wird beispielsweise an einem ersten Klemmpunkt X1 und einem zweiten Klemmpunkt X2 ein Lastwiderstand angeschlossen. Dieser Lastwiderstand ist vorzugsweise als ein PT-Widerstand, also temperaturabhängiger Widerstand, ausgestaltet. Für den Fall, dass ein Drahtbruch zu diesem Lastwiderstand auftritt, können an den Klemmpunkten X1 und X2 unzulässig hohe Spannungswerte auftreten. Um diese Störung zu vermeiden, wird wie in FIG 2 gezeigt, die Schaltungsanordnung aus FIG 1 mit weiteren Bauelementen versehen um eine Spannungsbegrenzung der Spannung zwischen dem ersten Klemmpunkt X1 und dem zweiten Klemmpunkt X2 zu erreichen.

Gemäß FIG 2 ist eine Schaltungsanordnung dargestellt, die durch Hinzunahme von weiteren schaltungstechnischen Maßnahmen und Bauteilen das Problem einer Überspannung an dem ersten Klemmpunkten X1 und X2 löst. Zwischen einem ersten Längszweig 1 und einem zweiten Längszweig 2, wobei zwischen den beiden Längszweigen 1,2 eine Betriebsspannung U_{b} angelegt ist, ist ein drittes elektronisches Bauelement V3 zum Schalten und Verstärken einer elektrischen Spannung angeordnet. Das dritte elektronische Bauelement V3 ist als ein Operationsverstärker ausgestaltet. Das dritte Bauelement V3 weist einen Eingang 30 auf. An diesem Eingang 30 ist eine erste Referenzspannung V_{REF_1} angelegt. Weiterhin zwischen den Längszweigen angeordnet ist ein erstes elektronisches Bauelement V1, wobei ein Strom vom ersten Längszweig 1 über die Klemmpunkte X1,X2 das erste Bauelement durchfließen kann und über einen ersten Widerstand R1 zu dem zweiten Längszweig 2 abfließen kann, wenn zwischen den Klemmpunkten X1,X2 ein Lastwiderstand RL angeordnet ist. Ein Ausgang 31 des dritten Bauelementes V3 ist über einen zweiten Widerstand R2 mit einem Eingang 10 des ersten Bauelementes V1 verbunden. Zur Ansteuerung des ersten Bauelementes V1 kann von dem dritten Bauelement V3 über den Ausgang 31 ein Strom in das erste Bauelement V1 getrieben werden. Dieser Strom stellt sich bei Ausgestaltung eines Transistors für das erste Bauelement V1 als ein Basisstrom I_{B_V1} für den ersten Transistor ein.

Zur Begrenzung einer unnötig hohen Leerlaufspannung zwischen den Klemmpunkten X1 und X2 ist weiterhin zwischen dem ersten Längszweig 1 und dem zweiten Längszweig 2 ein zweites elektronisches Bauelement V2 zum Schalten und Verstärken einer elektrischen Spannung angeordnet, wobei ein Eingang 20 des zweiten Bauelementes V2 über einen vierten Widerstand R4 mit dem Ausgang 31 des dritten Bauelementes V3 in Verbindung steht. Weiterhin ist zwischen dem zweiten Längszweig 2 und dem zweiten Bauelement V2 ein Mittel 40 zur Erzeugung einer zweiten Referenzspannung V_{REF_2} angeordnet. Durch diese schaltungstechnische Maßnahme kann eine Absenkung der Spannung am ersten Klemmpunkt X1 erreicht werden, wenn der Stromfluss durch den Lastwiderstand RL unterbrochen ist oder der Lastwiderstand RL unzulässig hochohmige Werte annimmt.

Das dritte Bauelement V3 ist als ein Operationsverstärker ausgestaltet und in dieser Schaltung wird ein Teil der Ausgangsspannung des Operationsverstärkers auf einen invertierenden Eingang zurückgeführt, diese Zurückführung wird mittels einer Rückführleitung 32 erreicht, wobei die zurückgeführte Spannung mittels eines Spannungsteilers, welcher sich ergibt aus der Reihenschaltung des Lastwiderstandes RL, dem ersten elektrischen Bauelement V1 und dem ersten Widerstand R1, welche in einer Reihenschaltung zwischen dem ersten Längszweig 1 und dem zweiten Längszweig 2 angeordnet sind. Mit dem Regeln zur Berechnung des Spannungsteilers lässt sich die Verstärkung dieser Schaltung bestimmen.

Solange ein Strompfad 3 über den ersten Klemmpunkt X1 und dem zweiten Klemmpunkt X2 zum zweiten Längszweig gebildet werden kann, wobei das erste elektrische Bauelement V1 als ein erster Transistor ausgestaltet ist, kann dementsprechend ein Strom über den Kollektor des ersten Transistors fließen. Dabei fließt der durch die erste Referenzspannung V_{REF_1} und dem ersten Widerstand R1 bestimmte Strom durch den Lastwiderstand RL. Dabei nimmt eine Ausgangsspannung U_{A_V3} des dritten elektronischen Bauelementes V3 in etwa den Wert V_{REF_1} + U_{BE_V1} + I_{B_V1}* R2 an, welches ungefähr der ersten Referenzspannung V_{REF_1} + 0,8 Volt entspricht. Wird der Lastwiderstand RL sehr groß oder wird sogar der Stromfluss durch den Lastwiderstand RL gänzlich unterbrochen, fällt die Spannung U_{R1} an R1 unter den Wert der ersten Referenzspannung V_{REF_1}. Das dritte elektronische Bauelement V3, dementsprechend der Operationsverstärker, versucht nun ein Gleichgewicht an seinen Eingängen 30,32 wieder herzustellen, wobei Gleichgewicht bedeutet eine Eingangsspannungsdifferenz möglichst zu Null zu bekommen. Dazu wird das dritte Bauelement V3 seine Ausgangsspannung U_{A_V3} erhöhen. Überschreitet diese Ausgangsspannung U_{A_V3} dann eine Schwellspannung von V_{REF_2} + U_{BE_V2} + I_{B_V2}* R4, so beginnt das zweite Bauelement V2 zu leiten. Dies bewirkt eine Absenkung der Spannung an dem Klemmpunkt X1. Bei vollständigem Einschalten des zweiten Bauelementes V2, wobei dann das erste Bauelement V1 ebenfalls komplett eingeschaltet ist, ist die Ausgangsspannungsdifferenz zwischen dem ersten Klemmpunkt X1 und dem zweiten Klemmpunkt X2 gleich der Differenz zwischen der zweiten Referenzspannung V_{REF_2} und der ersten Referenzspannung V_{REF_1}.

Damit kann über die Wahl der beiden Referenzspannungen V_{REF_1} und V_{REF_2} die Ausgangsspannung an den Klemmpunkten X1,X2 der Schaltungsanordnung gut bestimmt werden. Die zweite Referenzspannung V_{REF_2} kann in einer Ausgestaltung der Anordnung aus einer oder mehreren Dioden aufgebaut sein. Eine Beeinflussung eines Schaltpunktes des zweiten Bauteiles V2 wird durch die Höhe der zweiten Referenzspannung V_{REF_2}, seiner Basis-Emitterspannung U_{B_V2} und dem Spannungsabfall an dem vierten Widerstand R4 bestimmt. Eine weitere Möglichkeit den Schaltpunkt zu verändern, ist das Einfügen einer oder mehrerer Dioden, bei höheren Spannungen auch Z-Dioden, zwischen dem vierten Widerstand R4 und dem Eingang 20 des zweiten Bauelementes V2. Bei Ausgestaltung des zweiten Bauelementes V2 als ein Transistor entspricht der Eingang 20 dem Basisanschluss dieses Transistors.

Mit dieser Schaltungsanordnung können Überspannungsbegrenzungen in einem weiten Bereich einfach dimensioniert und an den jeweils konkreten Gegebenheiten gut angepasst werden. Als sehr vorteilhaft hat sich bei Analogeingabebaugruppen unter Verwendung der genannten Schaltungsanordnung, insbesondere bei RTD-Eingängen, die Vermeidung von Übersteuerungseffekten herausgestellt. Diese Übersteuerungseffekte haben sich bisher störend bemerkbar gemacht, da sie sich auf benachbarte Kanäle in Eingabebaugruppen bemerkbar gemacht haben.

## Patentansprüche

1. Schaltungsanordnung zur Begrenzung einer Spannung zwischen einem ersten Klemmpunkt (X1) und einem zweiten Klemmpunkt (X2) umfassend:
- einen ersten Längszweig (1) und einen zweiten Längszweig (2), wobei zwischen den beiden Längszweigen (1,2) eine Betriebsspannung (U_{b}) angelegt ist,
- ein drittes elektronisches Bauelement (V3) zum Schalten und Verstärken einer elektrischen Spannung, welches zwischen den Längszweigen (1,2) angeordnet ist, mit einem Eingang (30) an dem eine erste Referenzspannung (V_{REF_1}) angeschlossen ist, und einem Ausgang (31), der über einen zweiten Widerstand (R2) mit einem Eingang (10) eines ersten elektronischen Bauelement (V1) zum Schalten und Verstärken einer elektrischen Spannung in Verbindung steht,
- wobei das erste elektronische Bauelement (V1) derart zwischen den Längszweigen (1,2) angeordnet ist, das ein Strom vom ersten Längszweig (1) über die Klemmpunkte (X1,X2), das erste Bauelement (V1) und über einen ersten Widerstand (R1) zu dem zweiten Längszweig (2) fließen kann, wenn zwischen den Klemmpunkten (X1,X2) ein Lastwiderstand (RL) angeordnet ist,
**dadurch gekennzeichnet, dass** weiterhin zwischen dem ersten Längszweig (1) und dem zweiten Längszweig (2) ein zweites elektronisches Bauelement (V2) zum Schalten und Verstärken einer elektrischen Spannung angeordnet ist, wobei ein Eingang (20) des zweiten Bauelementes (V2) über einen vierten Widerstand (R4) mit dem Ausgang (31) des dritten Bauelementes (V3) in Verbindung steht und zwischen dem zweiten Längszweig (2) und dem zweiten Bauelement (V2) ein Mittel (40) zur Erzeugung einer zweiten Referenzspannung (V_{REF_2}) angeordnet ist, wodurch eine Absenkung der Spannung am ersten Klemmpunkt (X1) erreichbar ist, wenn der Stromfluss durch den Lastwiderstand (RL) unterbrochen ist.

2. Schaltungsanordnung nach Anspruch 1, wobei das Mittel zur Erzeugung der zweiten Referenzspannung (V_{REF_2}) als eine Diodenanordnung ausgestaltet ist.

3. Schaltungsanordnung nach Anspruch 1 oder 2, wobei zwischen dem Eingang (20) des zweiten elektronischen Bauelementes (V2) und dem Ausgang (31) des dritten elektronischen Bauelementes (V3) eine weitere Diodenanordnung angeordnet ist zum Verändern eines Schaltpunktes des zweiten elektronischen Bauelementes (V2).

4. Eingabebaugruppe ausgestaltet zum Anschluss für Widerstand-Temperatur-Messsensoren aufweisend eine Schaltungsanordnung nach einem der Ansprüche 1 bis 3, wobei durch die Schaltungsanordnung eine Spannungsbegrenzung an Klemmpunkten (X1,X2) für die Widerstand-Temperatur-Messsensoren durchführbar.

## Claims

1. Circuit arrangement for limiting a voltage between a first clamping point (X1) and a second clamping point (X2) comprising:
- a first series arm (1) and a second series arm (2), wherein the two series arms (1, 2) have an operating voltage (U_{b}) applied between them,
- a third electronic component (V3) for connecting and amplifying an electrical voltage, said component being arranged between the series arms (1, 2), having an input (30) to which a first reference voltage (V_{REF_1}) is connected and an output (31) which is connected via a second resistor (R2) to an input (10) of a first electronic component (V1) for connecting and amplifying an electrical voltage,
- wherein the first electronic component (V1) is arranged between the series arms (1, 2) such that a current can flow from the first series arm (1) via the clamping points (X1, X2), the first component (V1) and via a first resistor (R1) to the second series arm (2) when the clamping points (X1, X2) have a load resistor (RL) arranged between them,
**characterized in that** the first series arm (1) and the second series arm (2) also have a second electronic component (V2) for connecting and amplifying an electrical voltage arranged between them, wherein an input (20) of the second component (V2) is connected via a fourth resistor (R4) to the output (31) of the third component (V3), and the second series arm (2) and the second component (V2) have a means (40) for producing a second reference voltage (V_{REF_2}) arranged between them, as a result of which it is possible to achieve lowering of the voltage at the first clamping point (X1) when the flow of current through the load resistor (RL) is interrupted.

2. Circuit arrangement according to Claim 1, wherein the means for producing the second reference voltage (V_{REF_2}) is in the form of a diode arrangement.

3. Circuit arrangement according to Claim 1 or 2, wherein the input (20) of the second electronic component (V2) and the output (31) of the third electronic component (V3) have a further diode arrangement arranged between them for the purpose of altering a switching point for the second electronic component (V2).

4. Input assembly designed for connection for resistance temperature measurement sensors having a circuit arrangement according to one of Claims 1 to 3, wherein the circuit arrangement can perform voltage limiting at clamping points (X1, X2) for the resistance temperature measurement sensors.

## Revendications

1. Montage de limitation d'une tension entre un premier point ( X1 ) de borne et un deuxième point ( X2 ) de borne, comprenant :
- une première branche ( 1 ) longitudinale et une deuxième branche ( 2 ) longitudinale, une tension ( U_{b} ) de fonctionnement étant appliquée entre les deux branches ( 1, 2 ) longitudinales,
- un troisième composant ( V3 ) électronique pour appliquer et amplifier une tension électrique, qui est monté entre les branches ( 1, 2 ) longitudinales, comprenant une entrée ( 30 ), où une première tension ( V_{REF_1} ) de référence est appliquée, et une sortie ( 31 ), qui, par une deuxième résistance ( R2 ), est en liaison avec une entrée ( 10 ) d'un premier composant ( V1 ) électronique, pour appliquer et amplifier une tension électrique,
- dans lequel le premier composant ( V1 ) électronique est monté entre les branches ( 1, 2 ) longitudinales, de manière à ce qu'un courant puisse passer de la première branche ( 1 ) longitudinale à la deuxième branche ( 2 ) longitudinale en passant par les points ( X1, X2 ) de borne, par le premier composant ( V1 ) et par une première résistance ( R1 ), lorsqu'une résistance ( RL ) de charge est montée entre les points ( X1, X2 ) de borne,
**caractérisé, en outre, en ce qu'**un deuxième composant ( V2 ) électronique est, pour appliquer et amplifier une tension électrique, monté entre la première branche ( 1 ) longitudinale et la deuxième branche ( 2 ) longitudinale, une entrée ( 20 ) du deuxième composant ( V2 ) étant, par une quatrième résistance ( R4 ), en liaison avec la sortie ( 31 ) du troisième composant ( V3 ) et un moyen ( 40 ) de production d'une deuxième tension ( V_{REF_2} ) de référence est monté entre la deuxième branche ( 2 ) longitudinale et le deuxième composant ( V2 ), de sorte qu'un abaissement de la tension au premier point ( X1 ) de borne peut être atteint, lorsque le flux de courant passant dans la résistance ( RL ) de charge est interrompu.

2. Montage suivant la revendication 1, dans lequel le moyen de production de la deuxième tension ( V_{REF_2} ) de référence est conformé en agencement de diode.

3. Montage suivant la revendication 1 ou 2, dans lequel, entre l'entrée ( 20 ) du deuxième composant ( V2 ) électronique et la sortie ( 31 ) du troisième composant ( V3 ) électronique, est monté un autre agencement de diode, pour modifier un point de commutation du deuxième composant ( V2 ) électronique.

4. Module d'entrée conformé pour le raccordement de capteurs de mesure de résistance-température ayant un montage suivant l'une des revendications 1 à 3, dans lequel, par le montage, une limitation de tension aux points ( X1, X2 ) de borne, pour les capteurs de mesure de résistance-température, peut être effectuée.
